# EUROPÄISCHE PATENTSCHRIFT

(11) **EP 2 161 244 B1**
(45) Veröffentlichungstag und Bekanntmachung des Hinweises auf die Patenterteilung: **25.03.2015**
(21) Anmeldenummer: 09010540.4
(22) Anmeldetag: 17.08.2009
(51) Int. Cl.: C02F 1/42, C02F 1/00

(54) **Wasseraufbereitungsvorrichtung und -verfahren für ein Passagierflugzeug**
Water treatment device and method for a passenger aircraft
Dispositif et procédé de traitement de l'eau pour un avion de transport

(30) Priorität: 26.08.2008 DE 102008039667
(43) Veröffentlichungstag der Anmeldung: 10.03.2010
(73) Patentinhaber: Lufthansa Technik AG, 22335 Hamburg (DE)
(72) Erfinder: Maier-Witt, Joachim, 22605 Hamburg (DE); Riedel, Svenja Lena, 22529 Hamburg (DE); Mainusch, Sebastian, 22527 Hamburg (DE)
(74) Vertreter: Müller Verweyen

(56) Entgegenhaltungen:
- EP-A- 1 108 684
- EP-A- 1 604 898
- WO-A-2005/030658
- WO-A-2007/103234
- US-A1- 2006 169 649

## Beschreibung

Die Erfindung betrifft eine Wasseraufbereitungsvorrichtung und ein Wasseraufbereitungsverfahren für ein Passagierflugzeug.

In einer herkömmlichen Trinkwasser-Zirkulationsanlage dient eine Filtervorrichtung mit einem feinporigen Vlies zum mechanischen Ausfiltern von Partikeln einschließlich Bakterien. Die Verwendung von Aktivkohlefiltern ermöglicht die Absorption von Chemikalien. Zur Sterilisation des zirkulierenden Wassers wird eine Bestrahlung mit UV-Licht durchgeführt. Die Wirkung der Filtervorrichtung kann jedoch je nach den Einsatzbedingungen, insbesondere dem Wasserdurchsatz, schnell abnehmen, so dass insbesondere am Ende der Wechselzyklen eine effektive Filtrierung nicht immer gewährleistet ist. Die UV-Bestrahlungsgeräte sind teuer und anfällig, zudem ist eine Desinfektionswirkung durch UV-Bestrahlung nicht zweifelsfrei erwiesen.

DE 10 2007 062 925 offenbart eine Wasserfiltervorrichtung mit einer am Filtergehäuse angeordneten, mechanischen Erschöpfungsanzeige.

DE 297 07 278 betrifft eine Filtereinrichtung in einer Flaschenwaschmaschine.

JP 10 235120 A offenbart eine Filtereinheit mit einer Mehrzahl von parallel geschalteten Filtern, wobei das durch die Filtereinheit strömende Wasser mittels eines Durchflusssensors gemessen wird und eine Steuereinrichtung einen ersten Filter abschaltet und einen zweiten Filter zuschaltet, sobald das gemessene Wasservolumen einen vorbestimmten Wert erreicht hat.

WO 2005 030658 A1 offenbart ein Wasserfiltrationssystem für Einrichtungen in Privathaushalten, beispielsweise Kühlschränke, mit einer Filteranordnung, einem Durchflusssensor und einer Steuereinheit zur Überwachung des durch die Filtervorrichtung strömenden Wasservolumens auf der Grundlage eines von dem Durchflusssensor übermittelten Signals.

EP 1 108 684 A2 offenbart eine Wasserbehandlungsvorrichtung für eine Wasserzirkulationsanlage mit einem Filter, einer Mehrzahl von Sensoren und einer Steuereinrichtung mit einem Zeitglied zum Definieren des Timings verschiedener Vorgänge innerhalb der Steuereinrichtung, wobei die Steuereinrichtung zum Steuern der Wasserbehandlungsvorrichtung auf der Grundlage der von Sensoren ausgegebenen Signalen und des von dem Zeitglied definierten Timings zu steuern.

WO 2007 103234 A2 offenbart eine Ventilsteuereinheit für ein Wasserbehandlungssystem, insbesondere ein Wasserfiltriersystem oder ein Wasserenthärtesystem. Bei der Anwendung in einem Wasserfiltriersystem wird eine Rückspülung eingeleitet, wenn der mittels eines Differenzdruckmessers gemessene, über dem Wasserfiltriersystem abfallende Druck anzeigt, dass das Filtermedium verstopft. In einem Modus kann eine Rückspülung in festgelegten Zeitintervallen eingeleitet werden.

US 2006 0169649 A1 offenbart eine Wasserreinigungsvorrichtung mit zwei parallel geschalteten Desinfektionseinheiten und einer Durchflusssteuereinrichtung zum Steuern des Durchflusses durch die Desinfektionseinrichtungen. Beispielsweise wird von einer Desinfektionseinheit, die verstopft ist oder deren Desinfektionsmittel zur Neige geht, auf die andere Desinfektionseinheit umgeschaltet.

Die Aufgabe der Erfindung besteht darin, eine kostengünstige und zuverlässige Trinkwasserzirkulationsanlage und ein Wasseraufbereitungsverfahren bereitzustellen, wobei eine jederzeitige effektive Wasseraufbereitung unabhängig von den jeweiligen Einsatzbedingungen gewährleistet ist.

Die Erfindung löst diese Aufgabe mit den Mitteln der unabhängigen Ansprüche. Erfindungsgemäß ist die elektronische Steuereinrichtung zur Überwachung mehrerer mit dem Zustand der Filtervorrichtung zusammenhängender Größen eingerichtet. Wenn die Steuereinrichtung feststellt, dass eine überwachte Größe bestimmte Kriterien erfüllt, die auf einen Filterzustand mit reduzierter Filterwirkung schließen lassen, wird eine Filterwechselanforderung festgestellt und ein Filterwechselsignal ausgegeben, um einen manuellen oder automatischen Filterwechsel zu veranlassen. Erfindungsgemäß ist daher jederzeit, unabhängig von den jeweiligen Betriebsbedingungen und insbesondere unabhängig vom Gesamtwasserdurchsatz, eine hohe Filterwirkung und dadurch eine gleichbleibend hohe Wasserqualität zuverlässig gewährleistet. Hierdurch kann ein ausreichender Sterilisationseffekt bereits durch Filtrierung erreicht werden. Auf die herkömmliche UV-Bestrahlung kann dann erfindungsgemäß verzichtet werden.

Die überwachten Größen sind geeignet, einen Filterzustand mit reduzierter Filterwirkung festzustellen, der einen Austausch des Filters erforderlich macht. Erfindungsgemäß werden sämtliche der folgenden Größen unabhängig überwacht, um die Verlässlichkeit bei der Feststellung eines Filters mit reduzierter Wirkung zu erhöhen und die Kosteneffizienz zu steigern: Größen auf der Grundlage eines von einem entsprechenden Sensor bereitgestellten Messsignals, nämlich das insgesamt seit dem letzten Filterwechsel getankte Wasservolumen und ein über der Filtervorrichtung abfallender Druck; und zusätzlich eine in der Steuereinrichtung zur Verfügung stehende Größe, nämlich die Zeitdauer seit dem letzten Filterwechsel.

Beispielsweise kann eine alleinige Zugrundelegung des Kriteriums "Zeitdauer nach einem Filterwechsel in der Filtervorrichtung" bei einem überwiegend geparkten Flugzeug dazu führen, dass unnötigerweise ein unverbrauchter Filter ausgewechselt wird. Andererseits kann eine alleinige Zugrundelegung des Kriteriums "durch die Filtervorrichtung strömendes Wasservolumen" bei einem lange geparkten Flugzeug dazu führen, dass ein unter hygienischen Gesichtspunkten auszuwechselnder Filter nicht ausgewechselt wird. Erfindungsgemäß wird daher die Filterwechselanforderung in geeigneter Weise in Abhängigkeit von beiden zuvor genannten Kriterien bestimmt.

Vorzugsweise ist die elektronische Steuereinrichtung bei nicht erfolgendem Filterwechsel zum Abschalten der Trinkwasserzirkulationsanlage eingerichtet, um einen Betrieb mit zu geringer Filterwirkung zu verhindern.

Vorzugsweise umfasst die Wasseraufbereitungsvorrichtung mindestens eine parallel zu der Filtervorrichtung geschaltete weitere Filtervorrichtung. Wenn die elektronische Steuereinrichtung eine Filterwechselanforderung für die betriebene Filtervorrichtung feststellt, kann diese deaktiviert und die andere unverbrauchte Filtervorrichtung aktiviert werden, ohne dass der Betrieb der Trinkwasseranlage unterbrochen werden muss. Mittels dieser Redundanz kann die Standzeit der Filtervorrichtung beispielsweise verdoppelt werden.

Vorzugsweise umfasst die Filtervorrichtung mindestens einen Vorfilter und mindestens einen Feinfilter.

Die Erfindung ist vorzugsweise in einer Trinkwasser-Zirkulationsanlage mit einer verschiedene Entnahmestellen verbindenden Ringleitung, in der eine ständige Wasserzirkulation aufrechterhalten wird, anwendbar. Die Erfindung ist aber insbesondere auch anwendbar in einer einfachen Trinkwasseranlage ohne verschiedene Entnahmestellen verbindende Ringleitung.

Nach einem vorteilhaften Aspekt der Erfindung ist entweder in der Trinkwasseranlage oder am Boden zwischen Tankwasserfahrzeug und Flugzeugbetankungsanschluss eine Wasserenthärtevorrichtung vorgesehen. Dies kann eine Ionentauschervorrichtung sein oder eine Vorrichtung, die ein anderes Verfahren zur Vermeidung der Ausfällung von Kalk nutzt, beispielsweise unter Verwendung eines Granulats, das die Eigenschaft aufweist, das im Wasser gelöste Kalzium zur Bildung von Kalzitkristallen anzuregen, die sich auf der Oberfläche des Granulats absetzen; diese Kristalle wachsen an und brechen schließlich ab, es handelt sich also um eine gezielte Verkalkung. Die Wasserenthärtevorrichtung bietet die Möglichkeit, eine Wasserenthärtung vorzunehmen, um Komponenten, beispielsweise Luftbefeuchter, vor Verkalkungsschäden zu bewahren, und gegebenenfalls den gewünschten Härtegrad des Wassers einzustellen. Da der Einsatz von flugzeuggebundenen oder am Boden zwischen Tankwasserfahrzeug und Flugzeugbetankungsanschluss angeordneten Wasserenthärtevorrichtungen bisher nicht bekannt war, ist dieser Aspekt eigenständig, das heißt im Wege einer Teilanmeldung, unabhängig vom Aspekt der Filterzustandsüberwachung schützbar.

Die Wasserenthärtevorrichtung ist vorzugsweise im Wesentlichen vollständig drainierbar. Dies kann insbesondere bei geparkten Flugzeugen zur Vermeidung von Frostschäden oder Keimbildung zweckmäßig sein.

Wenn die Wasserenthärtevorrichtung zwischen einem Befüllanschluss für die Trinkwasseranlage und der Frischwasser-Tankvorrichtung geschaltet ist, ist sichergestellt, dass alles getankte Wasser enthärtet werden kann, ohne dass die Wasserenthärtevorrichtung den Strömungswiderstand zwischen der Tankvorrichtung und der Entnahmestelle erhöht.

Wenn die Trinkwasseranlage eine zu der Wasserenthärtevorrichtung parallel geschaltete Bypassleitung und ein Ventil zum Umschalten zwischen der Wasserenthärtevorrichtung und der Bypassleitung aufweist, kann beispielsweise durch Steuerung des Ventils mittels der elektronischen Steuereinrichtung ein gewünschter Wasserhärtegrad eingestellt werden.

Vorzugsweise ist die elektronische Steuereinrichtung zur Überwachung einer mit dem Zustand der Wasserenthärtevorrichtung zusammenhängenden Größe eingerichtet. Wenn die Steuereinrichtung feststellt, dass die überwachte Größe bestimmte Kriterien erfüllt, die auf einen Enthärterzustand mit reduzierter Enthärtewirkung schließen lassen, wird eine Enthärtererneuerungsanforderung festgestellt und ein Enthärtererneuerungssignals ausgegeben, um einen manuellen oder automatischen Enthärterwechsel zu veranlassen. Es ist daher jederzeit, unabhängig von den jeweiligen Betriebsbedingungen und insbesondere unabhängig von der gesamten getankten Wassermenge, eine hohe Enthärtewirkung und dadurch eine gleichbleibend hohe Wasserqualität zuverlässig gewährleistet.

Die überwachte Größe ist geeignet, einen Enthärterzustand mit reduzierter Enthärtewirkung festzustellen, der eine Erneuerung des Enthärters erforderlich macht. Dies kann eine Größe auf der Grundlage eines von einem entsprechenden Sensor bereitgestellten Messsignals sein, insbesondere das insgesamt seit der letzten Enthärtererneuerung getankte Wasservolumen. Es kann sich alternativ oder zusätzlich auch um eine in der Steuereinrichtung zur Verfügung stehende Größe handeln, insbesondere die Zeitdauer seit der letzten Enthärtererneuerung. Vorzugsweise wird eine Mehrzahl oder sämtliche dieser Größen unabhängig überwacht, um die Verlässlichkeit bei der Feststellung einer reduzierten Enthärtewirkung zu erhöhen.

Die Enthärtererneuerung kann auf verschiedene Arten durchgeführt werden, insbesondere durch Zu- und Abführen von Trägermaterial in die bzw. aus der Wasserenthärtevorrichtung, Zu- und Abführen einer Regeneriersubstanz in die bzw. aus der Wasserenthärtevorrichtung oder Auswechseln einer Trägermaterial beinhaltenden Kartusche.

Sowohl die Filterwechselanforderung als auch die Enthärtererneuerungsanforderung können für einen Bediener vorzugsweise optisch angezeigt werden.

Der Begriff Trinkwasseranlage umfasst im Rahmen dieser Anmeldung auch solche Wasseranlagen, die keine strenge Trinkwasserqualität aufweisen.

Die Erfindung wird im Folgenden anhand vorteilhafter Ausführungsformen unter Bezugnahme auf die beigefügten Figuren erläutert. Dabei zeigt:
- Fig. 1:: eine schematische Darstellung eines Ausschnitts einer Trinkwasser-Zirkulationsanlage;
- Fig. 2:: eine schematische Darstellung eines Ausschnitts einer Trinkwasser-Zirkulationsanlage in einer anderen Ausführungsform;
- Fig. 3:: eine schematische Darstellung eines Ausschnitts einer Trinkwasseranlage;
- Fig. 4:: eine schematische Darstellung eines Ausschnitts einer Trinkwasseranlage in einer anderen Ausführungsform;
- Fig. 5:: eine schematische Darstellung eines Ausschnitts einer Trinkwasseranlage in einer weiteren Ausführungsform; und
- Fig. 6:: eine schematische Darstellung einer Ionentauschervorrichtung.

Die Wasseraufbereitungsvorrichtung 10 ist Teil einer Trinkwasser-Zirkulationsanlage in einem Passagierflugzeug mit einer Frischwasser-Ringleitung 11 und einer Heißwasser-Ringleitung 12, die in den Figuren nicht vollständig gezeigt sind. Die Ringleitungen 11, 12 werden zur Verbindung mit den Trinkwasserentnahmestellen im Flugzeug, beispielsweise Wasserhähne, Toiletten, Bidets, Duschen, Trinkwasserspender, Dampfbäder, Luftbefeuchter, nahe an diesen vorbeigeführt. Die Pumpvorrichtungen 13, 14 dienen zur Erzeugung einer ständigen Zirkulation des Wassers in den Ringleitungen 11, 12 und zur Überwindung des Strömungswiderstands der später zu erläuternden Filtervorrichtung 28. Durch die Zirkulationsbewegung wird eine kontinuierliche Aufbereitung und eine gleichmäßige Temperierung des Wassers ermöglicht sowie lokaler Vereisung der Leitungen und Biofilmbildung in den Leitungen vorgebeugt.

Die Zirkulationsanlage umfasst eine Frischwasser-Tankvorrichtung 23, aus der Frischwasser entnommen, mittels der Pumpvorrichtung 13, die hier redundant ausgelegt ist, durch die Ringleitung 11 gepumpt, und schließlich wieder in die Tankvorrichtung 23 zurückgeleitet wird. Bei Öffnen einer Frischwasserentnahmestelle wird Frischwasser aufgrund von Druckbeaufschlagung mittels eines Kompressors 58 über eine Druckluftleitung 59 und einer Pumpe 13 der Tankvorrichtung 23 entnommen, deren Wasserstand entsprechend sinkt. Zum Auffüllen der Frischwassertankvorrichtung 23 ist ein Befüllanschluss 25 vorgesehen, wobei das getankte Wasservolumen beispielsweise mittels eines Durchflußsensors 35 gemessen werden kann.

Die Frischwasser-Ringleitung 11 wird in der Wasseraufbereitungsvorrichtung 10 von einer Frischwasserleitung 20 gebildet. Ein Gehäuse 15 der Wasseraufbereitungsvorrichtung 10 weist zu diesem Zweck entsprechende Zulauf- und Ablaufanschlüsse 16, 17 auf. In die Frischwasserleitung 20 sind ein Absperrventil 27, eine Filtervorrichtung 28 und ein Druckregler 29 geschaltet. Die Filtervorrichtung 28 umfasst vorzugsweise mindestens einen Grobfilter 31 und mindestens einen, hier zwei Feinfilter 32 sowie einen mit einer Drainageleitung 36 verbundenen Drainageanschluss 37. Sämtliche Filter der Filtervorrichtung 28 können in einer austauschbaren Filterkartusche zusammengefasst sein. Zur Messung des über der Filtervorrichtung 28 abfallenden Drucks ist ein Differenzdrucksensor 33 parallel zu der Filtervorrichtung 28 geschaltet.

Die Heißwasser-Ringleitung 12 wird in der Wasseraufbereitungsvorrichtung 10 von einer Heißwasserleitung 21 gebildet. Das Gehäuse 15 der Wasseraufbereitungsvorrichtung 10 weist zu diesem Zweck entsprechende Zulauf- und Ablaufanschlüsse 18, 19 auf. In die Heißwasserleitung 21 ist ein Rückschlagventil 73, ein Wasserheizer 26, gegebenenfalls ein relativ kleiner Heißwasserspeicher 24 und eine Pumpvorrichtung 14, die hier redundant ausgelegt ist, zum Pumpen von Heißwasser durch die Ringleitung 12 geschaltet. Zum Unterbrechen der Zirkulation in der Wasseraufbereitungsvorrichtung 10 ist ein elektrisch betriebenes, steuerbares Ventil 30 zum Absperren der Wasserleitungen 20, 21 vorgesehen. Die Heißwasser-Ringleitung 12 ist mittels einer vorzugsweise in der Wasseraufbereitungsvorrichtung 10 angeordneten Leitung 22 mit der Frischwasser-Ringleitung 11 verbunden, so dass bei der Entnahme von Heißwasser an einer Entnahmestelle Wasser aus der Frischwasser-Ringleitung 11 in die Heißwasser-Ringleitung 12 nachströmen kann.

Es ist weiterhin eine elektronische programmierbare bzw. programmierte Steuereinrichtung 34 vorgesehen, die in der Wasseraufbereitungsvorrichtung 10 angeordnet oder als separate Baueinheit ausgeführt sein kann. Die elektronische Steuereinrichtung 34 kann insbesondere in einer ohnehin vorgesehenen elektronischen Steuereinheit des Flugzeugs, beispielsweise für die Trinkwasseranlage, realisiert sein. Die elektronische Steuereinrichtung 34 dient insbesondere zur Zustandsüberwachung der Filtervorrichtung 28. Zu diesem Zweck ist die elektronische Steuereinrichtung 34 zweckmäßigerweise zur Überwachung einer oder mehrerer Zustandsgrößen der Filtervorrichtung 28 programmiert, wie im Folgenden erläutert wird.

Demnach ist die elektronische Steuereinrichtung 34 zur Überwachung des getankten Wasservolumens vorzugsweise mit dem Durchflußsensor 35 verbunden und weist einen elektronischen Speicher zum Speichern eines Werts auf, der das seit dem letzten Filterwechsel insgesamt getankte Wasservolumen repräsentiert. Wenn das seit dem letzten Filterwechsel insgesamt getankte Wasservolumen einen bestimmten Wert überschreitet, ist davon auszugehen, dass die Filterkapazität der Filtervorrichtung 28 erschöpft ist. Die Steuereinrichtung 34 stellt dann eine Filterwechselanforderung für die Filtervorrichtung 28 fest und gibt ein entsprechendes Filterwechselsignal aus.

Weiterhin ist die Steuereinrichtung 34 zur unabhängigen Überwachung des über der Filtervorrichtung 28 abfallenden Drucks vorzugsweise mit dem Differenzdrucksensor 33 verbunden. Mit zunehmender Betriebszeit erhöht sich der Filterwiderstand und reduziert sich entsprechend die Durchflussmenge. Wenn die gemessene Durchflussmenge einen bestimmten Wert unterschreitet, ist davon auszugehen, dass die Filterkapazität der Filtervorrichtung 28 erschöpft ist. Die elektronische Steuereinrichtung 34 stellt dann unabhängig eine Filterwechselanforderung für die Filtervorrichtung 28 fest und gibt ein entsprechendes Filterwechselsignal aus. Auf diese Weise kann eine Erschöpfung der Filterkapazität auch bei Wasser mit höherem Filtrierungsbedarf rechtzeitig festgestellt werden.

Schließlich weist die elektronische Steuereinrichtung 34 vorzugsweise einen elektronischen Speicher zum Speichern eines Werts auf, der die seit dem letzten Filterwechsel insgesamt verstrichene Zeit repräsentiert. Wenn die Filter in der Filtervorrichtung 28 ein bestimmtes Alter erreicht haben, ist davon auszugehen, dass die Filterkapazität aufgrund von alterungsbedingtem Verschleiß nicht mehr ausreichend ist. Die elektronische Steuereinrichtung 34 stellt dann eine unabhängige Filterwechselanforderung für die Filtervorrichtung 28 fest und gibt ein entsprechendes Filterwechselsignal aus.

In Abhängigkeit des von der elektronischen Steuereinrichtung 34 ausgegebenen Filterwechselsignals können unterschiedliche Aktionen vorgenommen werden. Die Filterwechselanforderung kann insbesondere an einem Bildschirm 57 im Flugzeug angezeigt werden, um eine qualifizierte Person zum Wechseln einer Filterkartusche der Filtervorrichtung 28 aufzufordern. Wenn ein erforderlicher Filterwechsel nicht rechtzeitig durchgeführt wird, was beispielsweise durch Überschreiten einer zulässigen Höchstgrenze des über der Filtervorrichtung abfallenden Drucks feststellbar ist, kann die Steuervorrichtung 34 eine automatische Abschaltung der Zirkulationsanlage beispielsweise mittels des Ventils 30 veranlassen.

Nach erfolgtem Filterwechsel werden zweckmäßigerweise die zuvor genannten elektronischen Speicher zum Speichern eines Werts, der das seit dem letzten Filterwechsel insgesamt getankte Wasservolumen repräsentiert, und eines Werts, der die seit dem letzten Filterwechsel insgesamt verstrichene Zeit repräsentiert, zurückgesetzt.

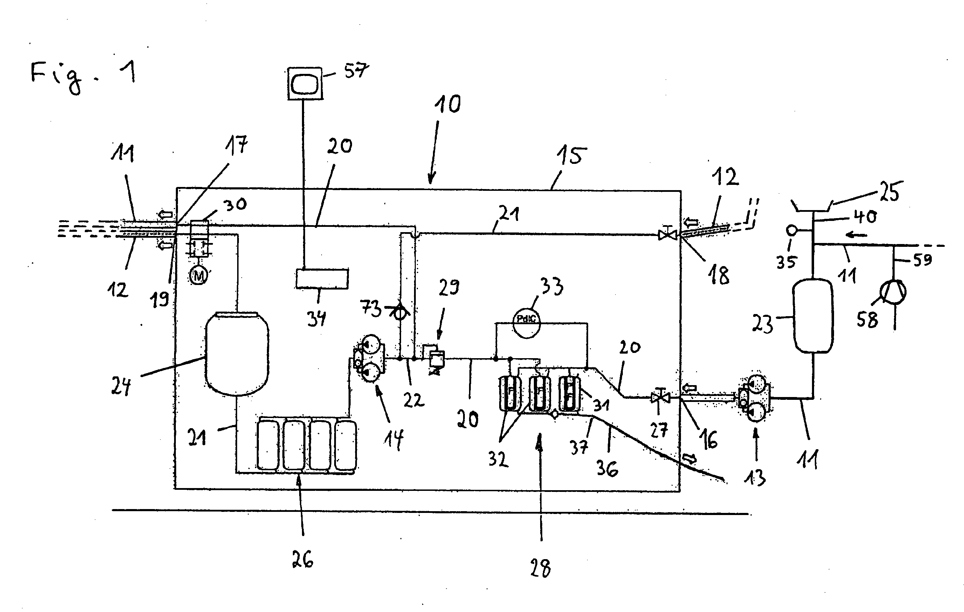

In der in Fig. 1 gezeigten Ausführungsform wird der über der Filtervorrichtung 28 insgesamt, das heißt über sämtliche Filter 31, 32 abfallende Druck gemessen. Es ist möglich, zusätzlich oder stattdessen den über einzelne Filter 31, 32 abfallenden Druck unabhängig zu messen und zu überwachen.

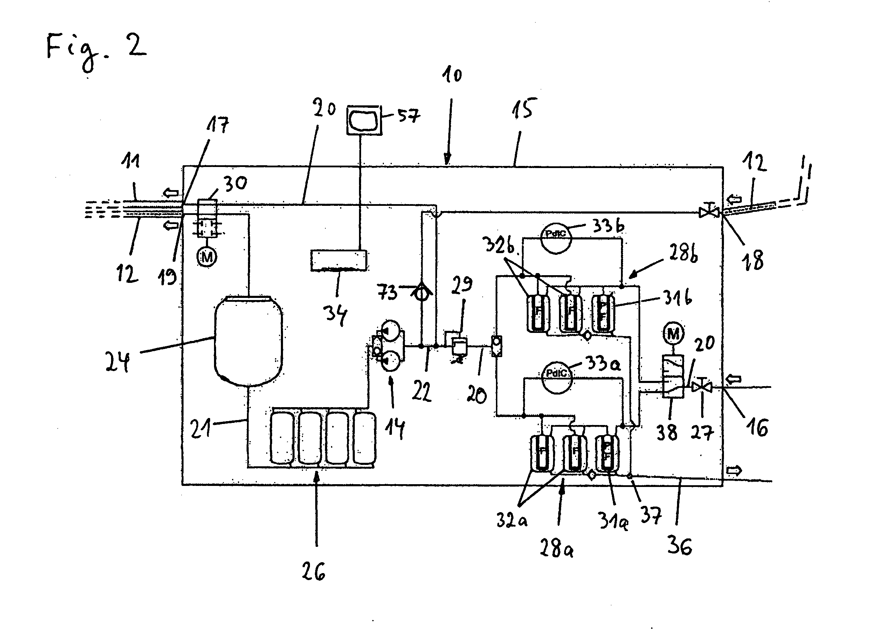

Die Ausführungsform gemäß Fig. 2 unterscheidet sich von der Ausführungsform gemäß Fig. 1 darin, dass hier zwei unabhängige, gleich aufgebaute Filtervorrichtungen 28a, 28b parallel geschaltet sind. Mittels eines elektrischen Ventils 38 kann entweder die Filtervorrichtung 28a oder die Filtervorrichtung 28b in die Frischwasser-Ringleitung 20 geschaltet werden. Das Ventil 38 wird von der elektronischen Steuereinrichtung 34 angesteuert. Wenn für eine der beiden Filtervorrichtungen 28a, 28b eine Filterwechselanforderung festgestellt wird, steuert die elektronische Steuereinrichtung 34 das Ventil 38 an, um eine automatische Umschaltung auf die jeweils andere, unverbrauchte Filtervorrichtung 28b, 28a zu bewirken. Aufgrund dieses automatisierten Filterwechsels muss der Betrieb der Zirkulationsanlage für den Austausch der Filterkartusche nicht unterbrochen werden, wodurch die Betriebsdauer der Zirkulationsanlage verdoppelt werden kann.

Selbstverständlich können auch mehr als zwei unabhängige Filtervorrichtungen 28 vorgesehen sein.

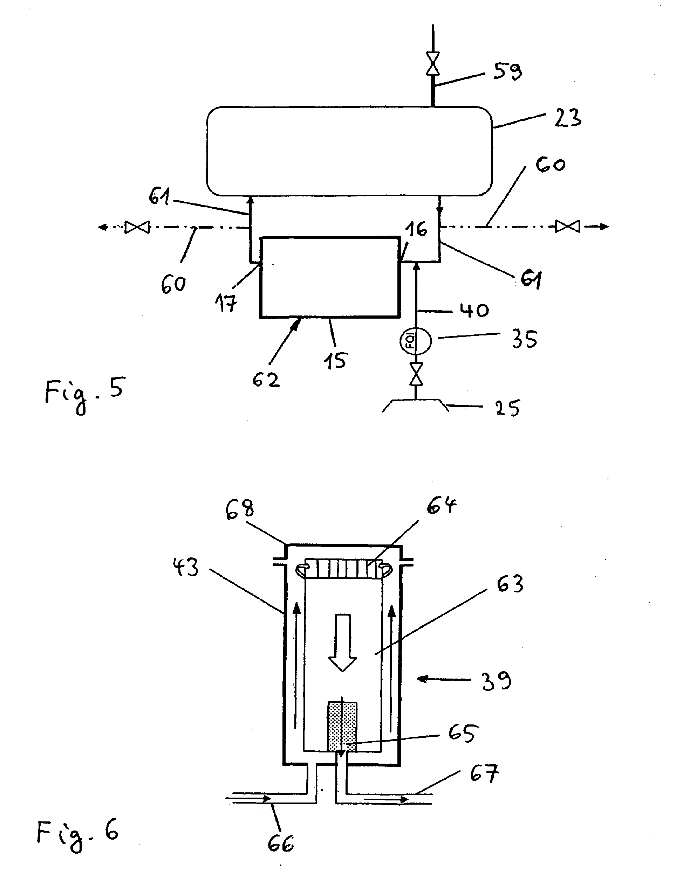

Die Ausführungsform gemäß Fig. 5 verdeutlicht, dass die Erfindung nicht nur auf Trinkwasser-Zirkulationsanlagen mit sämtliche Entnahmestellen verbindenden Ringleitungen 11, 12 anwendbar ist, sondern auch auf einfache Trinkwasseranlagen, bei denen sämtliche Wasserentnahmestellen nur über eine oder mehrere, im vorliegenden Beispiel zwei Zuleitungen 60 mit der Tankvorrichtung 23 verbunden sind. In gewöhnlichen Passagierflugzeugen werden derartige stationäre, das heißt ohne Wasserzirkulation arbeitende Anlagen zur Versorgung von Frischwasserentnahmestellen in WCs und Bordküchen eingesetzt. Die einfache Verbindungsleitung 60 zu den Wasserentnahmestellen führt zu einer wesentlich geringeren Gesamtleitungslänge im Vergleich zu Zirkulationsanlagen gemäß Fig. 1 oder 2.

In der Ausführungsform gemäß Figur 5 ist eine Wasseraufbereitungsvorrichtung 62 vorgesehen, die mit der Tankvorrichtung 23 über eine lokale Ringleitung 61 verbunden ist. "Lokal" bedeutet, dass die Ringleitung 61 der Tankvorrichtung 23 zugeordnet und vorzugsweise in der Nähe der Tankvorrichtung 23 angeordnet ist, jedoch nicht zur Verbindung der verschiedenen Wasserentnahmestellen im Flugzeug dient. Die Länge der Ringleitung 61 ist demnach klein gegenüber dem größten Abstand zweier Wasserentnahmestellen im Flugzeug.

Die Wasseraufbereitungsvorrichtung 62 kann insbesondere entsprechend der Wasseraufbereitungsvorrichtung 10 aus Fig. 1 oder 2, jedoch ohne Heißwasserleitung 21, aufgebaut sein, und verfügt über eine erfindungsgemäße Filterzustandsüberwachung. Die Pumpvorrichtung 13 ist vorzugsweise in der Wasseraufbereitungsvorrichtung 62 angeordnet. Mit der lokalen Ringleitung 61 kann mit geringem Aufwand eine Zirkulation des in der Tankvorrichtung 23 gespeicherten Frischwassers erreicht werden, wodurch einer Verkeimung von in der Tankvorrichtung 23 stehendem Wasser vorgebeugt wird.

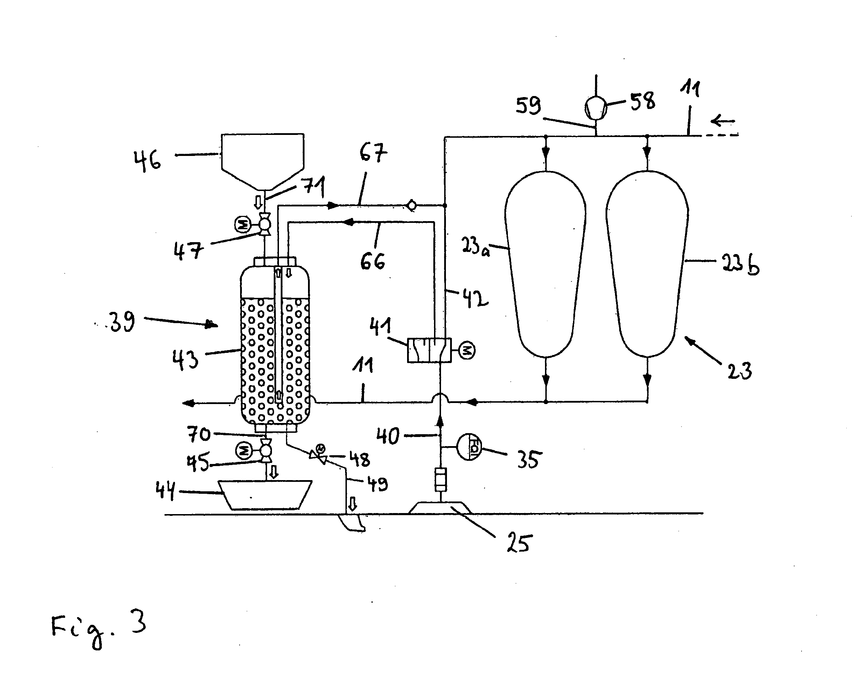

In Fig. 3 ist ein Ausschnitt einer Trinkwasseranlage mit einer eingangsseitigen Ionentauschervorrichtung 39 zur Enthärtung bzw. Entkalkung von getanktem Wasser gezeigt. Die Ionentauschervorrichtung 39 ist mittels einer Zuleitung 66 und einer Ableitung 67 in die Befüllleitung 40 zwischen dem Befüllanschluss 25 und der Eingangsseite der Tankvorrichtung 23, die hier aus beispielsweise zwei Tanks 23a, 23b besteht, geschaltet. Vor der Ionentauschervorrichtung 39 ist ein elektrisch betätigtes Ventil 41 angeordnet, womit wahlweise die Ionentauschervorrichtung 39 oder eine Bypassleitung 42 in die Befüllleitung 40 geschaltet werden kann. Die Ionentauschervorrichtung 39 umfasst einen Druckbehälter 43, der von dem getankten Wasser durchströmt wird, wenn das Ventil 41 entsprechend geschaltet ist, und der eine mittels eines elektrischen Ventils 48 verschließbare Drainageleitung 49 umfasst. Der Druckbehälter 43 beinhaltet einen Trägerstoff, der dem durchströmenden Wasser insbesondere Kalzium- und Magnesium-Ionen entzieht und/oder insbesondere Natrium-Ionen an das Wasser abgibt und es somit enthärtet.

Durch Umschalten des Ventils 41 beim Betanken lässt sich ein Mischungsverhältnis von ionengetauschtem und nicht-ionengetauschtem Wasser und somit der Härtegrad des Trinkwassers in der Tankvorrichtung 23 einstellen. Das Umschalten des Ventils 41 kann insbesondere von der elektronischen Steuereinrichtung 34 gesteuert werden. Die elektronische Steuereinrichtung 34 kann die Umschaltung auf der Grundlage von einem Bediener über ein Terminal eingegebener Werte für den Ist-Härtegrad des zu tankenden Wassers und den Soll-Härtegrad des getankten Wassers vornehmen. Alternativ können, wenn keine Eingabewerte zur Verfügung stehen, Standardwerte für den Ist-Härtegrad des zu tankenden Wassers und den Soll-Härtegrad des getankten Wassers verwendet werden. Die Regelung kann auf der Grundlage des von dem Durchflusssensor 35 bereitgestellten Volumenstromsignals erfolgen.

In Figur 6 ist eine weitere bevorzugte Ausführungsform einer Ionentauschervorrichtung 39 gezeigt. Sie umfasst einen Druckbehälter 43 und eine darin angeordnete, den Trägerstoff enthaltende Ionentauscher-Kartusche 63 mit einem Wassereinlass 64 und einem Wasserauslass 65. Der Druckbehälter 43 umfasst einen abnehmbaren Deckel 68 zum Austauschen der Kartusche 63, wenn eine Trägermaterialerneuerungsanforderung angezeigt wird.

Die elektronische Steuereinrichtung 34 ist zweckmäßigerweise zur Überwachung eines oder mehrerer Zustandsgrößen der Ionentauschervorrichtung 39 programmiert. Dies kann insbesondere auf der Grundlage eines von dem Durchflußsensor 35 bereitgestellten Meßsignals erfolgen. Die elektronische Steuereinrichtung 34 weist dann zweckmäßigerweise einen elektronischen Speicher zum Speichern eines Werts auf, der das seit der letzten Auffrischung der Ionentauschervorrichtung 39 insgesamt getankte Wasservolumen repräsentiert. Wenn das seit der letzten Auffrischung insgesamt getankte Wasservolumen einen bestimmten, von dem Volumen des Trägermaterials in der Ionentauschervorrichtung 39 abhängigen Wert überschreitet, ist davon auszugehen, dass die Ionenaustauschkapazität des Trägerstoffs in der Ionentauschervorrichtung 39 erschöpft ist. Die elektronische Steuereinrichtung 34 stellt dann eine Trägermaterialerneuerungsanforderung für die Ionentauschervorrichtung 39 fest und gibt ein entsprechendes Signal aus.

Eine Erneuerung des Trägermaterials der Ionentauschervorrichtung 39 kann insbesondere durch Wechsel des Druckbehälters 43 bzw. Wechsel der Trägermaterial-Kartusche 63, Wechsel des Trägermaterials selbst oder Regeneration des Trägermaterials erfolgen, wie im Folgenden erläutert wird. In den erstgenannten Fällen wird die Trägermaterialerneuerungsanforderung als eine Druckbehälter- bzw. Kartuschen-Wechselanforderung insbesondere an einem Bildschirm 57 im Flugzeug angezeigt, um eine qualifizierte Person zum Wechseln des Druckbehälters 43 bzw. der Kartusche 63 gegen einen unverbrauchten Druckbehälter bzw. eine unverbrauchte Kartusche aufzufordern.

Im Ausführungsbeispiel gemäß Fig. 3 erfolgt die Erneuerung durch automatischen Austausch des Trägermaterials selbst, nämlich Ablassen des verbrauchten Trägermaterials aus dem Druckbehälter 43 über eine Abführleitung 70 in einen Auffangbehälter 44 durch Öffnen eines elektrischen Ventils 45 und Nachfüllen von unverbrauchtem Trägermaterial in den Druckbehälter 43 aus einem Reservoir 46 über eine Zuführleitung 71 durch Öffnen eines elektrischen Ventils 47. Die elektrischen Ventile 45, 47 werden zweckmäßigerweise von der elektronischen Steuereinrichtung 34 bei Vorliegen einer Trägermaterialerneuerungsanforderung automatisch gesteuert.

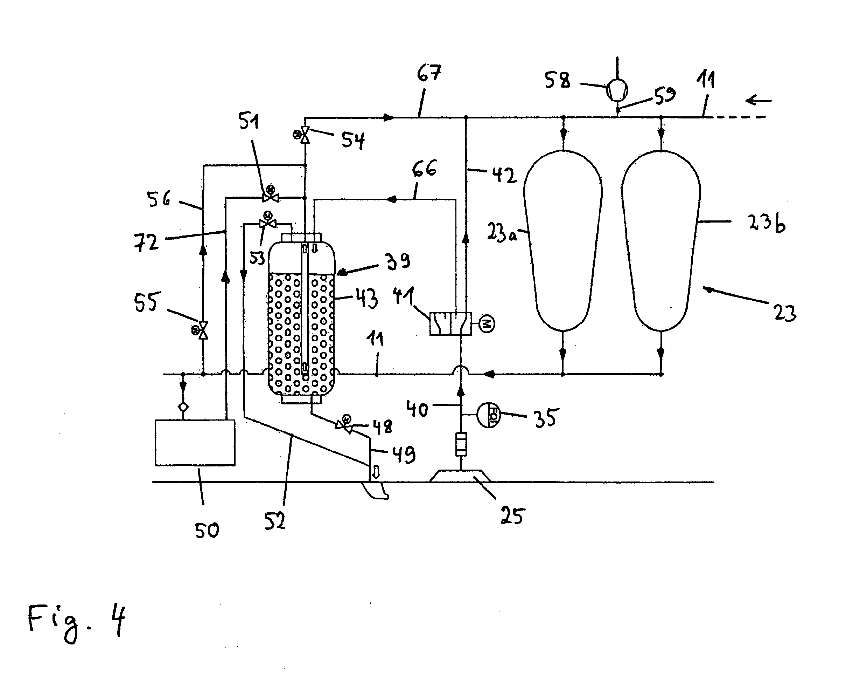

Im Ausführungsbeispiel gemäß Fig. 4 erfolgt die Erneuerung durch Regeneration des Trägermaterials, nämlich automatisches Zuführen einer Regeneriersalzlösung aus einem Reservoir 50 in den Druckbehälter 43 über eine Zuführleitung 72 durch Öffnen eines elektrischen Ventils 51 und Ableiten der Spülung durch eine mittels eines elektrischen Ventils 53 geöffneten Drainageleitung 52, währenddessen die Ionentauschervorrichtung 39 mittels eines elektrischen Ventils 54 von der Trinkwasserleitung 67, 11 getrennt wird. Anschließend wird das Ventil 51 geschlossen und das Trägermaterial durch Zuführen von Wasser über eine mittels eines elektrischen Ventils 55 geöffnete Leitung 56 gespült, wobei das Spülwasser wiederum durch die Drainageleitung 52 abgeführt wird. Die elektrischen Ventile 51, 53, 54 und 55 werden zweckmäßigerweise von der elektronischen Steuereinrichtung 34 bei Vorliegen einer Trägermaterialerneuerungsanforderung automatisch gesteuert.

Die erfindungsgemäßen Ionentauschervorrichtungen 39 zeichnen sich dadurch aus, dass sie drainierbar sind, das heißt dass Wasser aus dem Druckbehälter 43 durch die Leitung 49, nachdem Ventil 48 geöffnet wurde, vorzugsweise vollständig abgelassen werden kann.

Bevorzugte Ausführungsformen der Erfindung betreffen Trinkwasseranlagen mit einer Wasseraufbereitungsvorrichtung 10 gemäß Figur 1, 2 oder 5 kombiniert mit einer Ionentauschervorrichtung 39 gemäß Figur 3, 4 oder 6.

In einer weiteren, nicht dargestellten Ausführungsform ist die Ionentauschervorrichtung 39 nicht flugzeuggebunden, sondern am Boden insbesondere zwischen Tankwasserfahrzeug und Flugzeugbetankungsanschluss geschaltet. Die Ionentauschervorrichtung 39 kann dann nach der Betankung am Boden verbleiben, um dadurch Flugzeug-Leergewicht zu sparen. Die Ionentauschervorrichtung 39 ist in dieser Ausführungsform vorzugsweise in einer mobilen, am Boden bewegbaren Einheit vorgesehen, die auch eine gegebenenfalls erfindungsgemäß ausgeführte Filtervorrichtung zum Vorfiltrieren des Frischwassers und/oder eine Vorrichtung zum Zudosieren von wasserbehandelnden, die Bildung von Biofilmen verhindernden Mitteln aufweisen kann.

## Patentansprüche

1. Trinkwasserzirkulationsanlage für ein Passagierflugzeug, umfassend eine Frischwasser-Tankvorrichtung (23), mindestens eine mit der Tankvorrichtung (23) verbundene Ringleitung (11) zum Versorgen von mit der Ringleitung verbundenen Frischwasserentnahmestellen, und eine Wasseraufbereitungsvorrichtung (10) in der Ringleitung (11) umfassend einen Wasserzulaufanschluss (16), einen Wasserablaufanschluss (17), eine Leitung (20) zur Verbindung des Wasserzulaufanschlusses (16) mit dem Wasserablaufanschluss (17), eine in der Leitung (20) angeordnete Filtervorrichtung (28) und eine elektronische Steuereinrichtung (34), wobei die Trinkwasserzirkulationsanlage mindestens einen in einer Befüllleitung angeordneten Sensor (35) zur kontinuierlichen Volumenmessung des getankten Frischwassers umfasst und die elektronische Steuereinrichtung (34) zur Überwachung sämtlicher der folgenden mit dem Zustand der Filtervorrichtung (28) zusammenhängenden Größen:
- getanktes durch die Filtervorrichtung (28) strömendes Wasservolumen auf der Grundlage eines entsprechenden Meßsignals von dem Sensor (35);
- Zeitdauer nach einem Filterwechsel in der Filtervorrichtung (28); und
- eines über der Filtervorrichtung (28) abfallenden Drucks auf der Grundlage eines entsprechenden Meßsignals;
und, wenn die überwachten Größen bestimmte Kriterien erfüllen, zur Feststellung einer Filterwechselanforderung und zur Ausgabe eines Filterwechselsignals eingerichtet ist.

2. Trinkwasserzirkulationsanlage nach Anspruch 1, umfassend mindestens einen Sensor (33) zur Messung eines über der Filtervorrichtung (28) abfallenden Drucks.

3. Trinkwasserzirkulationsanlage nach Anspruch 1 oder 2, wobei die elektronische Steuereinrichtung (34) bei nicht erfolgendem Filterwechsel zum Abschalten der Trinkwasserzirkulationsanlage eingerichtet ist.

4. Trinkwasserzirkulationsanlage nach einem der Ansprüche 1 bis 3, umfassend mindestens eine zu der Filtervorrichtung (28a) parallel geschaltete weitere Filtervorrichtung (28b).

5. Trinkwasserzirkulationsanlage nach Anspruch 4, wobei die elektronische Steuereinrichtung (34) zum Umschalten von einer Filtervorrichtung (28a; 28b), für die eine Filterwechselanforderung festgestellt ist, auf eine andere Filtervorrichtung (28b; 28a) eingerichtet ist.

6. Trinkwasserzirkulationsanlage nach einem der vorangehenden Ansprüche, umfassend eine Wasserenthärtevorrichtung (39).

7. Trinkwasserzirkulationsanlage nach Anspruch 6, wobei die Wasserenthärtevorrichtung (39) drainierbar ist.

8. Trinkwasserzirkulationsanlage nach Anspruch 6 oder 7, wobei die elektronische Steuereinrichtung (34) zur Überwachung einer mit dem Zustand der Wasserenthärtevorrichtung (39) zusammenhängenden Größe und, wenn die überwachte Größe bestimmte Kriterien erfüllt, zur Feststellung einer Enthärtererneuerungsanforderung und zur Ausgabe eines Enthärtererneuerungssignals eingerichtet ist.

9. Trinkwasserzirkulationsanlage nach Anspruch 8, wobei die elektronische Steuereinrichtung (34) zur Feststellung der Enthärtererneuerungsanforderung bei Überschreiten eines auf der Grundlage eines entsprechenden Meßsignals bestimmten Gesamtvolumenstroms eingerichtet ist.

10. Trinkwasserzirkulationsanlage nach Anspruch 8 oder 9, wobei die elektronische Steuereinrichtung (34) zum Steuern einer Einrichtung (44-47; 50, 51, 52, 53) zum Zu- und Abführen von Trägermaterial und/oder einer Regeneriersubstanz in die bzw. aus der Wasserenthärtevorrichtung (39) bei festgestellter Enthärtererneuerungsanforderung eingerichtet ist.

11. Trinkwasserzirkulationsanlage nach einem der Ansprüche 6 bis 10, wobei die Wasserenthärtevorrichtung (39) eine auswechselbare, Trägermaterial beinhaltende Kartusche (63) umfasst.

12. Trinkwasserzirkulationsanlage nach einem der vorangehenden Ansprüche, umfassend eine steuerbare Anzeigeeinrichtung (57) zur optischen Anzeige einer Filterwechsel- und/oder Enthärtererneuerungsanforderung bei Empfang eines entsprechenden Steuersignals von der Steuereinrichtung (34).

13. Wasseraufbereitungsverfahren für eine Trinkwasserzirkulationsanlage in einem Passagierflugzeug mit einer Ringleitung zum Versorgen von mit der Ringleitung verbundenen Frischwasserentnahmestellen unter Verwendung einer in der Ringleitung angeordneten Filtervorrichtung, wobei sämtliche der folgenden mit dem Zustand der Filtervorrichtung zusammenhängenden Größen automatisch überwacht werden: getanktes durch die Filtervorrichtung strömendes Wasservolumen auf der Grundlage eines entsprechenden Meßsignals von einem in einer Befüllleitung angeordneten Sensor zur Messung des getankten Wasservolumens; Zeitdauer nach einem Filterwechsel in der Filtervorrichtung; und eines über der Filtervorrichtung abfallenden Drucks auf der Grundlage eines entsprechenden Meßsignals; und, wenn die überwachten Größen bestimmte Kriterien erfüllen, Feststellung einer Filterwechselanforderung und Ausgabe eines Filterwechselsignals.

## Claims

1. Drinking water circulation system for a passenger aircraft, including a fresh water tank device (23), at least one ring pipe (11) connected to the tank device (23) for feeding fresh water tapping points connected to the ring pipe, and a water treatment device (10) in the ring pipe (11) including a water inlet port (16), a water outlet port (17), a pipe (20) for connecting the water inlet port (16) to the water outlet port (17), a filtration device (28) located in the pipe (20) and an electronic control device (34), wherein the drinking water circulation system includes at least one sensor (35) located in a feed pipe for continuously measuring the volume of the refilled fresh water, and the electronic control device (34) is adapted to monitor all of the following parameters associated with the status of the filtration device (28):
- volume of refilled water flowing through the filtration device (28) on the basis of a corresponding measuring signal from the sensor (35);
- time period after a filter exchange in the filtration device (28); and
- a pressure loss over the filtration device (28) on the basis of a corresponding measuring signal;
and, if the monitored parameters fulfil certain criteria, to determine a filter exchange request and to output a filter exchange signal.

2. Drinking water circulation system according to claim 1, including at least one sensor (33) for measuring a pressure loss over the filtration device (28).

3. Drinking water circulation system according to claim 1 or 2, wherein the electronic control device (34) is adapted to turn off the drinking water circulation system in the event of a filter exchange not being carried out.

4. Drinking water circulation system according to one of the claims 1 to 3, including at least one further filtration device (28b) connected parallel to the filtration device (28a).

5. Drinking water circulation system according to claim 4, wherein the electronic control device (34) is adapted to switch from one filtration device (28a; 28b), for which a filter exchange request has been determined, to another filtration device (28b; 28a).

6. Drinking water circulation system according to any one of the preceding claims, including a water softening device (39).

7. Drinking water circulation system according to claim 6, wherein the water softening device (39) is drainable.

8. Drinking water circulation system according to claim 6 or 7, wherein the electronic control device (34) is adapted to monitor a parameter associated with the status of the water softening device (39) and, if the monitored parameter fulfils certain criteria, to determine a softener exchange request and to output a softener exchange signal.

9. Drinking water circulation system according to claim 8, wherein the electronic control device (34) is adapted to determine the softener exchange request if a total volume flow determined on the basis of a corresponding measuring signal is exceeded.

10. Drinking water circulation system according to claim 8 or 9, wherein the electronic control device (34) is adapted to control a device (44-47; 50, 51, 52, 53) for feeding and discharging substrate and/or a regenerating substance to or from the water softening device (39) if a softener exchange request has been determined.

11. Drinking water circulation system according to one of the claims 6 to 10, wherein the water softening device (39) includes an exchangeable cartridge (63) containing substrate.

12. Drinking water circulation system according to any one of the preceding claims, including a controllable display device (57) for visually displaying a filter exchange request and/or a softener exchange request if a corresponding control signal is received from the control device (34).

13. Water treatment method for a drinking water circulation system in a passenger aircraft comprising a ring pipe for feeding fresh water tapping points connected to the ring pipe using a filtration device located in the ring pipe, wherein all of the following parameters associated with the status of the filtration device are automatically monitored: volume of refilled water flowing through the filtration device on the basis of a corresponding measuring signal from a sensor located in a feed pipe for measuring the volume of the refilled water; time period after a filter exchange in the filtration device; and a pressure loss over the filtration device on the basis of a corresponding measuring signal; and, if the monitored parameters fulfil certain criteria, determination of a filter exchange request and output of a filter exchange signal.

## Revendications

1. Installation de circulation d'eau potable pour un avion de transport, comprenant un système de réservoir d'eau douce (23), au moins une conduite annulaire (11) reliée au système de réservoir (23) et destinée à alimenter des points de prélèvement d'eau douce reliés à la conduite annulaire, et un dispositif de traitement d'eau (10) dans la conduite annulaire (11) qui comprend un raccord d'alimentation en eau (16), un raccord d'évacuation d'eau (17), une conduite (20) destinée à relier le raccord d'alimentation en eau (16) au raccord d'évacuation d'eau (17), un système de filtration (28) disposé dans la conduite (20) et un système de commande électronique (34), laquelle installation de circulation d'eau potable comportant au moins un capteur (35) disposé dans une conduite de remplissage et destiné à mesurer en continu le volume d'eau douce avitaillée et le système de commande électronique (34) étant agencé pour surveiller toutes les grandeurs suivantes en rapport avec l'état du système de filtration (28) :
- le volume d'eau avitaillé circulant dans le système de filtration (28) sur la base d'un signal de mesure correspondant provenant du capteur (35) ;
- la durée après un changement de filtre dans le système de filtration (28) ; et
- une chute de pression sur le système de filtration (28) sur la base d'un signal de mesure correspondant ;
et, lorsque les grandeurs surveillées satisfont certains critères, il est agencé pour détecter une exigence de changement de filtre et pour émettre un signal de changement de filtre.

2. Installation de circulation d'eau potable selon la revendication 1, comprenant au moins un capteur (33) destiné à mesurer une chute de pression sur le système de filtration (28).

3. Installation de circulation d'eau potable selon la revendication 1 ou 2, dans laquelle le système de commande électronique (34) est agencé pour couper l'installation de circulation d'eau potable lorsque le changement de filtre n'est pas effectué.

4. Installation de circulation d'eau potable selon une des revendications 1 à 3, comprenant au moins un autre système de filtration (28b) raccordé en parallèle au système de filtration (28a).

5. Installation de circulation d'eau potable selon la revendication 4, dans laquelle le système de commande électronique (34) est agencé pour commuter d'un système de filtration (28a; 28b), pour lequel une exigence de changement de filtre a été détectée, à un autre système de filtration (28b; 28a).

6. Installation de circulation d'eau potable selon une des revendications précédentes, comprenant un dispositif adoucisseur d'eau (39).

7. Installation de circulation d'eau potable selon la revendication 6, dans laquelle le dispositif adoucisseur d'eau (39) peut être drainé.

8. Installation de circulation d'eau potable selon la revendication 6 ou 7, dans laquelle le système de commande électronique (34) est agencé pour surveiller une grandeur en rapport avec l'état du dispositif adoucisseur d'eau (39) et, lorsque la grandeur surveillée satisfait certains critères, il est agencé pour détecter une exigence de renouvellement de l'adoucisseur et pour émettre un signal de renouvellement de l'adoucisseur.

9. Installation de circulation d'eau potable selon la revendication 8, dans laquelle le système de commande électronique (34) est agencé pour détecter l'exigence de renouvellement de l'adoucisseur en cas de dépassement d'un débit volumique global défini sur la base d'un signal de mesure correspondant.

10. Installation de circulation d'eau potable selon la revendication 8 ou 9, dans laquelle le système de commande électronique (34) est agencé pour commander un moyen (44-47; 50, 51, 52, 53) destiné à alimenter et à évacuer un matériau support et/ou une substance de régénération dans le dispositif adoucisseur d'eau (39) ou hors de celui-ci dans le cas où une exigence de renouvellement de l'adoucisseur a été détectée.

11. Installation de circulation d'eau potable selon une des revendications 6 à 10, dans laquelle le dispositif adoucisseur d'eau (39) comprend une cartouche (63) remplaçable qui contient un matériau support.

12. Installation de circulation d'eau potable selon une des revendications précédentes, comprenant un moyen d'affichage (57) commandable destiné à afficher visuellement une exigence de changement de filtre et/ou de renouvellement de l'adoucisseur lors de la réception d'un signal de commande correspondant en provenance du système de commande (34).

13. Procédé de traitement d'eau pour une installation de circulation d'eau potable dans un avion de transport, qui comprend une conduite annulaire destinée à alimenter des points de prélèvement d'eau douce reliés à la conduite annulaire en utilisant un système de filtration disposé dans la conduite annulaire, dans lequel toutes les grandeurs suivantes en rapport avec l'état du système de filtration sont surveillées automatiquement : le volume d'eau avitaillé circulant dans le système de filtration sur la base d'un signal de mesure correspondant provenant d'un capteur disposé dans une conduite de remplissage et destiné à mesurer le volume d'eau avitaillé ; la durée après un changement de filtre dans le système de filtration ; et une chute de pression sur le système de filtration sur la base d'un signal de mesure correspondant ; et, lorsque les grandeurs surveillées satisfont certains critères, détection d'une exigence de changement de filtre et émission d'un signal de changement de filtre.
